**Europäisches Patentamt**

**European Patent Office**

**Office européen des brevets**

(11) Veröffentlichungsnummer: **0 074 474**
**B1**

(12) **EUROPÄISCHE PATENTSCHRIFT**

(45) Veröffentlichungstag der Patentschrift:
**27.12.85**

(21) Anmeldenummer: **82106098.5**

(22) Anmeldetag: **08.07.82**

(51) Int. Cl.⁴: **B 23 K 7/06,** B 22 D 11/126

(54) **Anordnung eines Flämmbrenners.**

(30) Priorität: **11.09.81 DE 3136023**

(43) Veröffentlichungstag der Anmeldung:
**23.03.83 Patentblatt 83/12**

(45) Bekanntmachung des Hinweises auf die Patenterteilung:
**27.12.85 Patentblatt 85/52**

(84) Benannte Vertragsstaaten:
**BE FR GB IT**

(56) Entgegenhaltungen:
**EP - A - 0 017 807**
**DE - A - 2 831 152**
**DE - A - 2 925 419**
**DE - C - 1 287 421**

**Patent Abstracts of Japan, Band 5, Nr. 170, 29. Okotber 1981**

(73) Patentinhaber: **MESSER GRIESHEIM GMBH, Hanauer Landstrasse 330, D-6000 Frankfurt/Main 1 (DE)**

(72) Erfinder: **Baier, Alfred, In den Rübgärten 13, D-6242 Kronberg 2 (DE)**
Erfinder: **Lucht, Alfred, Am Landbach 10, D-6101 Bickenbach (DE)**
Erfinder: **Münch, Gerhard, Am Wasserturm 3-5, D-6000 Frankfurt am Main (DE)**
Erfinder: **Pfeuffer, Alfred, Spechtstrasse 14, D-6078 Neu-Isenburg (DE)**

BUNDESDRUCKEREI BERLIN

**Beschreibung**

Die Erfindung betrifft die Anordnung eines Flämmbrenners zur Entfernung des beim Brennschneiden eines Werkstückes entstehenden Schlackenbartes.

Beim Brennschneiden, insbesondere beim Schneiden dicker Blöcke und Brammen, entsteht an der der Schnittfläche sich anschließenden Seite des Werkstückes — üblicherweise der Unterseite — ein sog. Schlackenbart, der in einem dünnen Streifen entlang der Kante zwischen Unterseite und Schnittfläche mit dem Grundmaterial verbunden ist. Bei normalen Strangbrennschneidanlagen, bei denen der kontinuierlich gegossene Strang auf bestimmte Teilstücklängen quergeteilt wird, entsteht der Schlackenbart am Block bzw. am Brammende.

Bei den neuerdings auch in Anwendung gelangenden Jumbo-Brammen-Stanggießanlagen wird der Strang nicht nur quergeteilt, sondern nach der Stranggußanlage die Bramme in der Längsrichtung, z. B. in zwei schmalere Brammen geteilt. Hierbei fällt der Schlackenbart nun auch an der gesamten Länge der Bramme an der Unterkante des vorgenannten Längs-Teilschnittes an. Solche Schlackenbärte führen zu Unregelmäßigkeiten und zu Ausschuß beim nachfolgenden Arbeitsgang, z. B. Auswalzen, eines solchen Werkstückes. Wenn es sich dabei um einen Schlackenbart handelt, wie er beim Brennschneiden auftritt, werden die Walzoberflächen beim Eintritt eines solchen Werkstückes in den Walzspalt beschädigt. Beim Auswalzen werden solche Schlackenbestandteile in die Oberfläche des Bleches eingewalzt und bilden dann Fehlerstellen.

Es ist daher erforderlich, den störenden Schlackenbart vor der Weiterverarbeitung des Werkstückes (Block, Bramme od. dgl.) zu entfernen. Dies kann beispielsweise durch Meißeln oder Abschleifen erfolgen. Maßnahmen also, die manuell bedingt, oft zeitraubend und damit unwirtschaftlich sind.

Es ist weiterhin bekannt, den Schlackenbart durch Flämmen zu entfernen. Bei der Einrichtung der DE-PS 1 287 421 geschieht dies dadurch, daß der Flämmbrenner ausschließlich auf die den Schlackenbart tragende Unterseite des Werkstückes, und zwar in einer bestimmten Winkelstellung zum Werkstück gerichtet ist. Bei dem Verfahren nach der DE-OS 2 831 152 wird der Schlackenbart mittels einer aus mehreren Brennern bestehenden Brenneranordnung aufgeschmolzen und entfernt, wobei die Brenner die den Schlackenbart tragende Kante teilweise umschließen, d. h. auf Unterseite und Schnittfläche gerichtet sind. In beiden Fällen wird somit der Schlackenbart in dem Bereich des Werkstückes, wo er gegenständlich sichtbar vorhanden ist durch ein oder mehrere Flämmbrenner aufgeschmolzen.

Es hat sich gezeigt, daß eine solche Anordnung von Flämmbrennern wirtschaftlich sehr aufwendig ist. Entweder muß nämlich das Werkstück gedreht werden oder ein arbeitsaufwendiges Über-Kopf-Flämmen erfolgen. Auch vergrößert sich die Anzahl der benötigten Flämmbrenner, da nicht ausschließlich im Schnittflächenbereich geflämmt wird.

Der Erfindung liegt die Aufgabe zugrunde, Flämmbrenner für das Entfernen des Schlackenbartes so anzuordnen, daß eine spezielle Winkeleinstellung der Flämmbrenner entbehrlich wird, die Flämmbrenner in ihrer räumlichen Anordnung leicht bedienbar sind, die Anzahl der zum Einsatz kommenden Flämmbrenner möglichst klein gehalten werden kann und trotzdem eine einwandfreie Abnahme des Schlackenbartes vom Werkstück erfolgt.

Diese Aufgabe wird erfindungsgemäß dadurch gelöst, daß der Flämmbrenner lediglich auf die Schnittfläche des brenngeschnittenen Werkstückes gerichtet ist.

Nach einer weiteren Ausbildung der Erfindung ist der Flämmbrenner auf den dem an der Unterseite des Werkstückes haftenden Schlackenbartes benachbarten Bereich der Schnittfläche gerichtet. Dieser Bereich erstreckt sich vorzugsweise von der Kante zwischen Unterseite und Schnittfläche aus mindestens 20 mm auf der Schnittfläche in Richtung des Brenners. Auf den ersten Blick mag es vielleicht paradox erscheinen, den Schlackenbart dort wegzuflämmen, wo er optisch gar nicht vorhanden ist.

Die Erklärung für dieses Phänomen ergibt sich aus der nachfolgenden Beschreibung der Erfindung, in Verbindung mit der beigefügten Zeichnung, in der dargestellt ist, in

Fig. 1 die erfindungsgemäße Anordnung des Flämmbrenners zur Entfernung des Schlackenbartes und

Fig. 2 eine vergrößerte Ansicht einer Werkstückkante mit Schlackenbart.

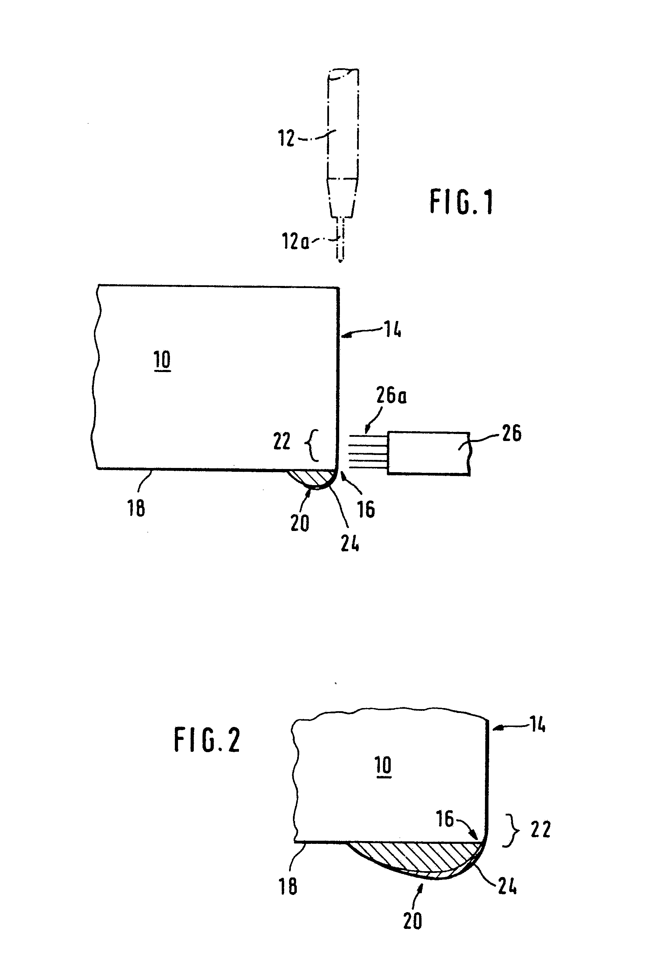

Fig. 1 zeigt einen Teil eines Werkstückes 10, z. B. einer Bramme, die mittels eines gestrichelt dargestellten Schneidbrenners 12 unterteilt worden ist. Die durch den Schneidbrenner 12 erzeugte Schnittfläche ist mit dem Bezugszeichen 14 gekennzeichnet.

Die beim Brennschneiden entstehende Schneidschlacke fließt während des Schneidens entlang der Schnittfläche 14 (Schnittfuge) — in Fig. 1 — nach unten.

Diese Abwärtsbewegung erfolgt nicht allein aufgrund der Schwerkraft, sondern in erster Linie wird die Schneidschlacke durch die kinetische Energie des Schneidsauerstoffstrahles 12a aus der Schnittfuge herausgetrieben. Der Idealzustand wäre an sich, daß die Schneidschlacke durch den Schneidsauerstoffstrahl 12a mit entsprechen hoher kinetischer Energie vollständig aus der Schnittfuge und vor allem aus dem Werkstückbereich weggeblasen würde. Dies ist jedoch in der täglichen Praxis nicht der Fall. Hier fließt vielmehr die Schneidschlacke nach dem Verlassen der von den Schnittflächen 14 begrenzten Schnittfuge adhäsionsbedingt um die untere Kante 16 des Werkstückes 10 in Richtung auf die Werkstück-Unterseite 18. Auf diese Weise bildet sich entlang der Schnittfuge an der Unterseite 18 ein sog. Schlackenbart 20.

Dieser Schlackenbart 20 besteht aus einem »Gemisch« aus Eisenoxid und Eisen, wobei der Reineisenanteil prozentual in der Regel geringer ist als der Eisenoxidanteil. Der Schlackenbart 20 ist mit seiner überwiegenden Materialmenge der Unterseite 18 des Werkstückes 10 verhältnismäßig »lose« zugeordnet, d. h. es besteht zwischen dem Schlackenbart 20 und der Unterseite 18 eine nur geringe Haftverbindung. Der Grund hierfür liegt darin, daß einmal die flüssige Schneidschlacke auf ihrem Weg zur Unterseite schon abgekühlt und darüber hinaus der Oxidanteil schon so groß ist, daß kein Aufschmelzen der Unterseite und damit sich wieder bildende innige Verbindung zwischen der Schneidschlacke und dem Grundwerkstoff des Werkstückes erfolgen kann.

Im Gegensatz dazu jedoch bildet sich am unteren Bereich 22 der Schnittfläche während des Brennschneidevorganges ein dünner Metallfilm 24 mit hohem Eisenanteil aus, der fest mit dem Grundwerkstoff der Schnittfläche 14 verbunden ist und in den Schlackenbart 20 übergeht.

Durch diesen Metallfilm 24 erfolgt die feste Verbindung des Schlackenbartes mit dem Werkstück, nämlich im Bereich 22 der Schnittfläche 14 und nicht, wie optisch an sich auf den ersten Blick naheliegend, an der Unterseite des Werkstückes.

Zur Beseitigung des Schlackenbartes 20 von der Unterseite 18 des Werkstückes 10 wird daher erfindungsgemäß der den Schlackenbart 20 haltende Metallfilm 24 entfernt, welcher an der benachbarten vertikalen Schnittfläche 14, und zwar hauptsächlich in deren unterem, der Kante 16 zugekehrten Bereich 22 vorhanden ist, d. h. durch den Brennschneidvorgang sich dort gebildet hat.

Zu diesem Zweck ist gemäß der Erfindung ein Flämmbrenner 26 ausschließlich der Schnittfläche 14 zugeordnet. Nach erfolgtem Brennschnitt mittels des Schneidbrenners 12 wird die Schnittfläche 14 geflämmt, und zwar vorzugsweise nur in dem Bereich 22, in dem der Metallfilm 24 mit dem Grundwerkstoff des Werkstückes 10 fest verbunden ist. Dieser Bereich 22 erstreckt sich von der Kante 16 aus mindestens 20 mm auf der Schnittfläche 14 in Richtung des Brenners 12. Die maximale Höhe des Bereiches 22 richtet sich nach der Brammenhöhe und kann bei in der Höhe sehr niedrigen Brammen die volle Brammenhöhe ausmachen. Durch das Abflämmen des Bereiches 22 wird somit in vorteilhafter Weise nicht nur der Metallfilm sondern — und dies ist von erfindungsgemäßer Bedeutung — der an diesem Metallfilm haftende Schlackenbart 20 mit entfernt. Der Schlackenbart fällt dabei von der Unterseite 18 aufgrund seiner kaum vorhandenen Haftung ab. Der für das Flämmen des Bereiches 22 erforderliche Flämmbrenner 26 braucht an sich nur so groß dimensioniert sein, daß der austretende Flämmsauerstoffstrahl 26a lediglich diesen Bereich zur vollständigen Entfernung des Metallfilms 24 abflämmt.

## Patentansprüche

1. Anordnung eines Flämmbrenners (26) zur Entfernung des beim Brennschneiden eines Werkstückes (10) entstehenden Schlackenbartes (20), dadurch gekennzeichnet, daß der Flämmbrenner (26) lediglich auf die Schnittfläche (14) des brenngeschnittenen Werkstücks (10) gerichtet ist.

2. Anordnung nach Anspruch 1, dadurch gekennzeichnet, daß der Flämmbrenner (26) auf den dem an der Unterseite (18) des Werkstückes (10) haftenden Schlackenbartes (20) benachbarten Bereich (22) der Schnittfläche (14) gerichtet ist.

3. Anordnung nach Anspruch 2, dadurch gekennzeichnet, daß sich der Bereich (22) von der Kante (16) aus mindestens 20 mm auf der Schnittfläche (14) in Richtung des Brenners (12) erstreckt.

## Claims

1. Arrangement of a scarfing burner (26) for removing the slag bead (20) produced during flame cutting of a workpiece (10) characterized in that the scarfing burner (12) is directed only towards the cut surface (14) of the flame-cut workpiece (10).

2. Arrangement according to claim 1, characterized in that the scarfing burner (26) is directed towards the area (2) of the cut surface adjacent to the slag bead (20) which adheres to the bottom (18) of the workpiece (10).

3. Arrangement according to claim 2, characterized in that said area (22) extends from the edge (16) at least 20 mm into the cut surface (14) in the direction of the burner (12).

## Revendications

1. Disposition d'un chalumeau de flammage (26) pour enlever les barbes de scories (20) formées lors de l'oxycoupage d'une pièce (10), caractérisée en ce que le chalumeau de flammage (26) est dirigé uniquement sur la surface de coupe (14) de la pièce (10) à sérarer par oxycoupage.

2. Disposition selon la revendication 1, caractérisée en ce que le chalumeau de flammage (26) est dirigé vers la zone (22) voisine des barbes de scories (20) qui s'accrochent à la face inférieure (18) de la pièce (10), au niveau de la surface de coupe (14).

3. Disposition selon la revendication 2, caractérisée en ce que la zone (22) partant de l'arête (16) s'étend sur au moins 20 mm sur la surface de coupe (14) en direction du chalumeau (12).

FIG.1

FIG.2